# EUROPEAN PATENT SPECIFICATION

(11) **EP 1 564 733 B1**
(45) Date of publication and mention of the grant of the patent: **11.08.2010**
(21) Application number: 03754185.1
(22) Date of filing: 20.10.2003
(51) Int. Cl.: G11B 7/24, G11B 7/26

(54) **DISK SUBSTRATE AND OPTICAL DISK**
PLATTENSUBSTRAT UND OPTISCHE PLATTE
SUBSTRAT DE DISQUE ET DISQUE OPTIQUE

(30) Priority: 19.11.2002 JP 2002335064
(43) Date of publication of application: 17.08.2005
(73) Proprietor: Sony Corporation, Tokyo 141-0001 (JP)
(72) Inventor: FUKUSHIMA, Yoshihito, C/O SONY CORPORATION, Tokyo 141-0001 (JP); NAKANO, Jun, 3/O SONY CORPORATION, Tokyo 141-0001 (JP); MASUHARA, Shin, C/O SONY CORPORATION, Tokyo 141-0001 (JP); KOSHITA, Akio, C/O SONY CORPORATION, Tokyo 141-0001 (JP)
(74) Representative: Körber, Martin Hans
(86) International application number: PCT/JP2003/013363
(87) International publication number: WO 2004/047093

(56) References cited:
- JP-A- 4 301 221
- JP-A- 8 185 632
- JP-A- 8 185 632
- JP-A- 2002 008 269
- US-A1- 2002 006 104
- US-A1- 2002 097 648

## Description

### Technical Field

The invention relates to a disc substrate and an optical disc. More particularly, the invention is suitable when it is applied to an optical disc in which an information signal portion and a light transmitting layer are sequentially formed on a disc substrate and an information signal is recorded and/or reproduced by irradiating a laser beam from the side where the light transmitting layer is formed.

### Background Art

In recent years, it is demanded to further increase a recording capacity of a storing medium (recording media). Therefore, in an optical disc as one of the recording media which have been most widespread at present, studies to further increase the recording capacity by increasing a recording density are vigorously being made.

For example, as a method of realizing the high recording density, a method whereby a wavelength of a laser beam which is used to record/reproduce an information signal is shortened and an NA (Numerical Aperture) of an objective lens is increased, thereby reducing a beam spot diameter has been proposed.

For example, in an optical system of a CD (Compact Disc), a semiconductor laser which emits a laser beam having a wavelength of 780 nm or 830 nm and an objective lens having an NA of 0.45 are provided. In an optical system of a DVD (Digital Versatile Disc) which has been widespread in recent years, a semiconductor laser which emits a laser beam having a wavelength of 660 nm and an objective lens having an NA of 0.6 are provided. By providing such an optical system, the recording capacity of about 8 times of that of the CD can be realized in the DVD.

However, if the realization of such a high NA of the objective lens is progressed, an aberration of light which is caused by an inclination of the disc increases, so that such a problem that a permission amount of an inclination (tilt) of a disc surface to an optical axis of a pickup decreases occurs. To solve such a problem, a method of decreasing a thickness of substrate which transmits the laser beam has been proposed. For example, while the substrate having a thickness of 1.2 mm is used in the CD, the substrate having a thickness of 0.6 mm is used in the DVD.

When considering the case of storing a video image of an HD (High Definition) or the like onto an optical disc in future , the recording capacity of the DVD is insufficient. Therefore, it is demanded to realize the shorter wavelength of the laser beam which is used to record/reproduce the information signal, the higher NA of the objective lens, and the thinner substrate.

Therefore, there has been proposed an optical disc of the next generation in which a light transmitting layer having a thickness of 0.1 mm is formed on an information signal portion formed on a substrate and an information signal is recorded/reproduced by irradiating a laser beam having a wavelength of 405 nm onto the information signal portion from the light transmitting layer side through an objective lens having an NA of 0.85. Since the optical disc of the next generation as mentioned above has a structure in which the laser beam is inputted from the light transmitting layer side instead of the substrate side, the permission amount of the tilt can be set to a sufficient large value in spite of the high NA of 0.85.

Upon manufacturing of the optical disc of the next generation, it is required to suppress a warp and an eccentricity more than those of the conventional optical disc. For this purpose, upon manufacturing of the optical disc of the next generation, in order to guarantee mechanical characteristics of a final product, it is important that the mechanical characteristics of the transparent substrate just after the molding are measured at the earlier stage in the manufacturing step and they are fed back quickly.

Hitherto, as a method of measuring the mechanical characteristics such as inclination, eccentricity, and the like of the optical disc, a measuring method such as an optical stylus method or the like has been proposed (for example, refer to JP-A-3-120640).

In a mechanical characteristics measuring apparatus using the optical stylus method, it is necessary to provide a pickup according to a format of the optical disc whose mechanical characteristics are measured, that is, thicknesses of the substrate and the light transmitting layer and a value of the track pitch. This is because in the case of measuring the mechanical characteristics of the optical disc by using the optical stylus method, it is necessary to allow the light converged by the pickup to trace grooves.

A method of measuring the mechanical characteristics of the disc substrate which is used for the optical disc of the next generation by using the mechanical characteristics measuring apparatus using the optical stylus method has been proposed. According to such a method, at least a reflective film and a light transmitting layer having a thickness of 0.1 mm are formed on the disc substrate and, by irradiating the laser beam from the light transmitting layer side, the mechanical characteristics of the disc substrate are measured. By forming at least the reflective film and the light transmitting layer having a thickness of 0.1 mm onto the disc substrate as mentioned above, the mechanical characteristics of the disc substrate can be measured.

However, in order to measure the mechanical characteristics of the disc substrate as mentioned above, the light transmitting layer of 0.1 mm has to be formed and the mechanical characteristics of the disc substrate cannot be measured in the state of the transparent substrate just after the molding. Consequently, a feedback speed upon manufacturing becomes slow, so that the productivity of the optical disc is deteriorated.

Therefore, a method whereby a pickup which can converge the laser beam onto each groove formed on the disc substrate in the state where the light transmitting layer of 0.1 mm is not formed is designed and equipped for the mechanical characteristics measuring apparatus has been proposed. However, if such a pickup is designed and equipped for the mechanical characteristics measuring apparatus only for the purpose of measuring the mechanical characteristics of the transparent substrate, expenses for manufacturing facilities are raised.

Therefore, a method of measuring the mechanical characteristics of the optical disc of the next generation by using the mechanical characteristics measuring apparatus of the optical disc using the optical stylus method which has conventionally been widespread has been proposed. The mechanical characteristics measuring apparatus is used to measure an eccentricity amount of the disc substrate having a thickness of 1.2 mm and is constructed by a semiconductor laser which emits the laser having a wavelength of 680 nm and a pickup having an objective lens of an NA of 0.55. In the foregoing optical disc of the next generation, since the substrate having a thickness of about 1.1 mm is used, by converging the laser beam through the disc substrate, a surface oscillation amount, the inclination of the disc, and the like can be also measured by such a conventional mechanical characteristics apparatus.

However, in the format of the optical disc of the next generation mentioned above, since the track pitch is equal to or less than 0.6 µm, a tracking error signal of A sufficient level cannot be obtained by the optical system equipped for the conventional mechanical characteristics measuring apparatus. In other words, the eccentricity amount cannot be measured by the conventional mechanical characteristics measuring apparatus.

JP 08 185632 A discloses an optical disk capable of simultaneously reading out information from plural tracks without using a special optical system. A track bundle is formed on the disk, which consists of plural tracks in a parallel spiral shape. The track interval between the bundles is wider than the interval within the track bundle. Therefore, a tracking shift can be detected without using a special optical system.

### Disclosure of Invention

It is, therefore, an object of the invention to provide a disc substrate and an optical disc whose eccentricity amount can be easily measured in the state of the transparent substrate just after molding in the optical disc in which an interval between grooves of a data area is equal to or less than 0.6 µm.

The present inventors have eagerly examined to solve the foregoing problems of the conventional techniques. An outline of the examination will be described herein below. According to the knowledge of the present inventors, the reason why the eccentricity amount of the disc substrate whose track pitch is equal to or less than 0.6 µm cannot be measured by the conventional mechanical characteristics measuring apparatus is because the tracking error signal of a sufficient level cannot be obtained from the disc substrate of such a format.

To solve the foregoing problems, the present inventors have vigorously examined with respect to a method whereby in the disc substrate whose track pitch is equal to or less than 0.6 µm, the tracking error signal of a sufficient level can be obtained by the conventional mechanical characteristics measuring apparatus. Thus, the present inventors havefoundamethodwhereby an eccentricity measuring area to measure the eccentricity is provided and an interval between the grooves is widened only in the eccentricity area.

However, the present inventors have further examined with respect to such a method, so that they have found that the method has the following problems.

Generally, in the case of forming a thin groove in which a groove interval in a data area is equal to or less than 0.6 µm, a wavelength of an exposing laser upon mastering has to be also shortened in correspondence to such a thin groove and a laser of, for example, a wavelength of 266 nm is used.

However, they have found that there is such a problem that in the case of using such a laser of the short wavelength, if the track pitch is widened in the foregoing eccentricity measuring area, since a groove width to the track pitch is too narrow, the sufficient push-pull signal cannot be obtained and, further, a signal waveform is also distorted.

By further making the examination as mentioned above, the inventors have found a method whereby an eccentricity measuring area constructed by a groove area in which spiral grooves have been formed and a planar mirror area adjacent to the groove area is provided for the disc substrate.

The invention has been made on the basis of the above examination.

Therefore, to solve the above problems, according to the first invention of the present invention, there is provided a disc substrate having an eccentricity measuring area, which comprises a plurality of groove areas, in which spiral grooves are formed, and a plurality of planar mirror areas, which are spatially alternately arranged in radial direction, wherein a repetition interval (d3) of the groove areas or the mirror areas has a predetermined value. The disc substrate is **characterized in that** the width of said eccentricity measuring area is selected so as to have a value in a range from 30 µm or more to 3mm or less.

According to the second invention of the present invention, there is provided an optical disc comprising:
a disc substrate having an eccentricity measuring, which comprises a plurality of groove areas, in which spiral grooves are formed, and a plurality of planar mirror areas, which are spatially alternately arranged in radial direction, wherein a repetition interval (d3) of the groove areas or the mirror areas has a predetermined value;
an information signal portion formed on one principal plane of the disc substrate; and
a protective layer for protecting the information signal portion.

The optical disc is **characterized in that** the width of said eccentricity measuring area (14) is selected so as to have a value in a range from 30 µm or more to 3mm or less.

As mentioned above, according to the invention, since the disc substrate has the eccentricity measuring area in which the groove area formed with the spiral grooves and the planar mirror area are spatially alternately arranged, the conventional mechanical characteristics measuring apparatus can discriminate the groove area formed with the spiral grooves as if the groove area were a single groove.

### Brief Description of Drawings

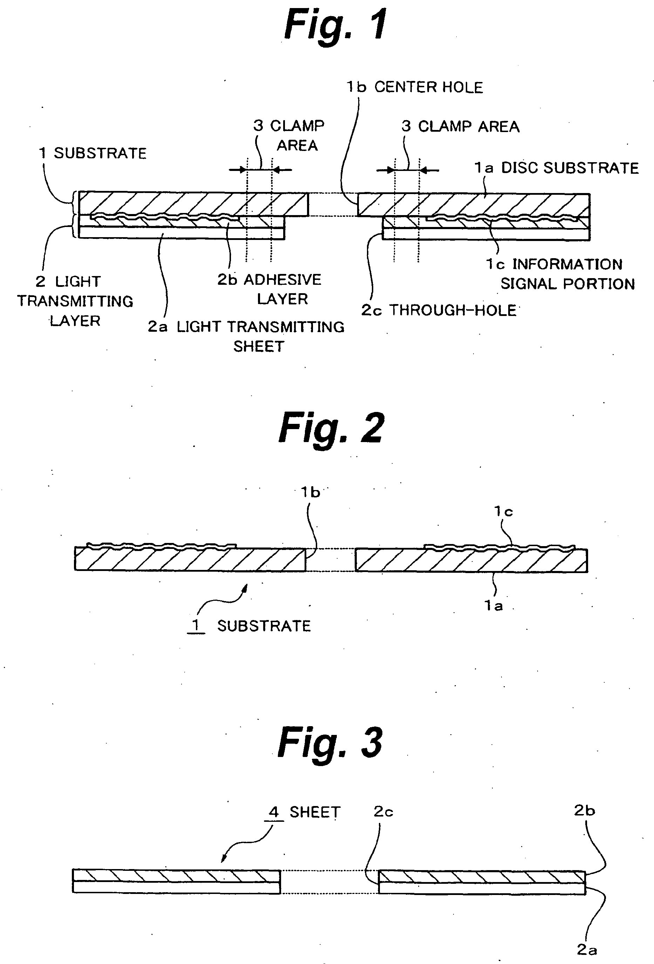

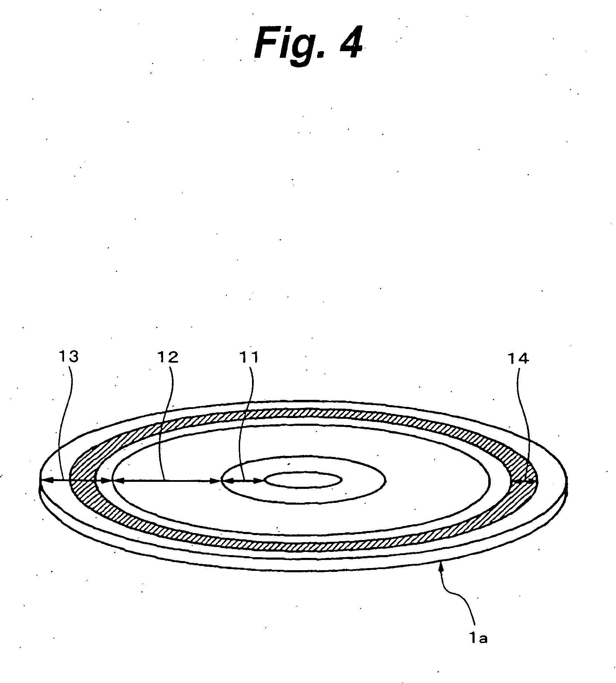

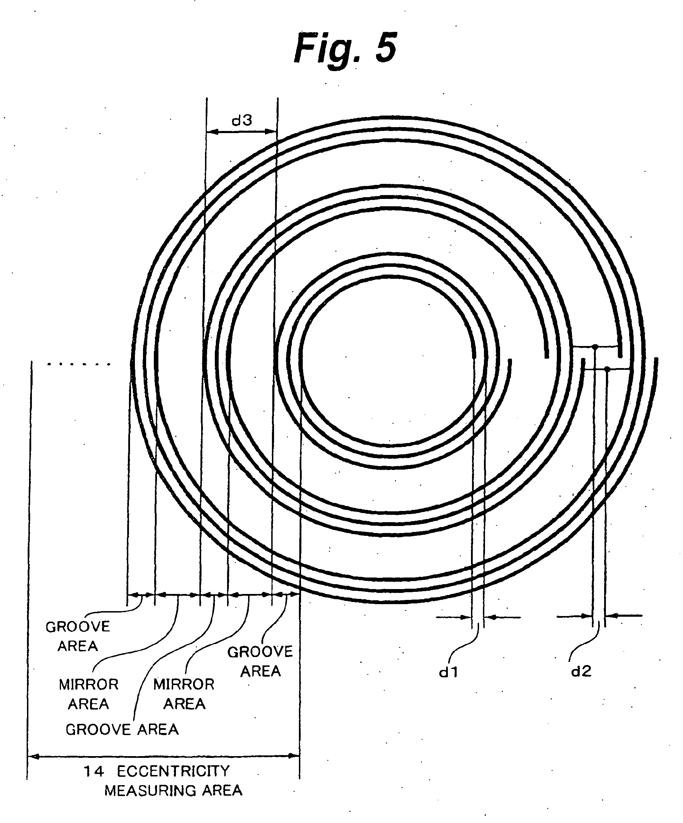

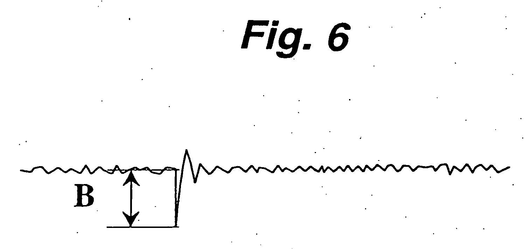

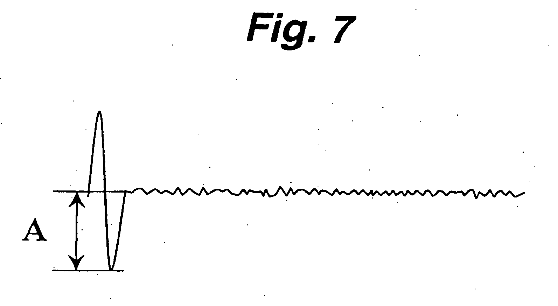

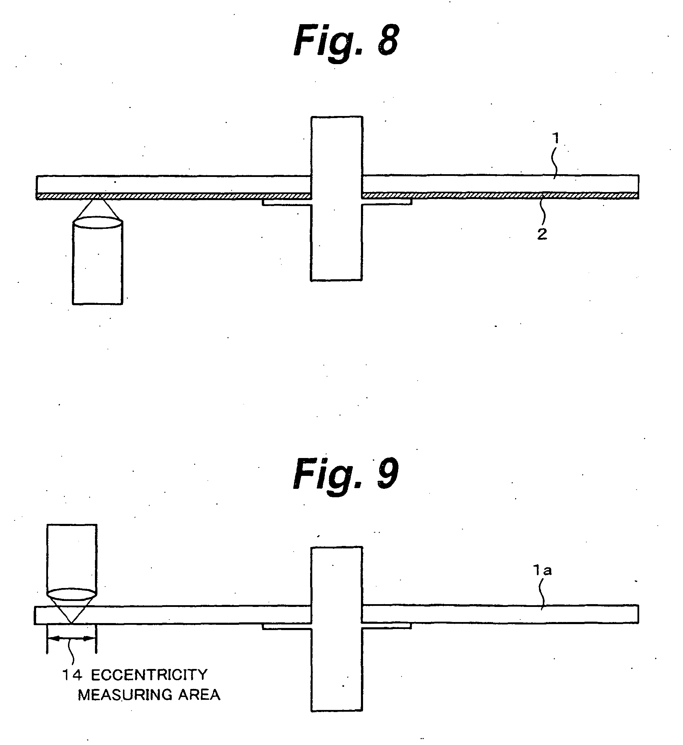

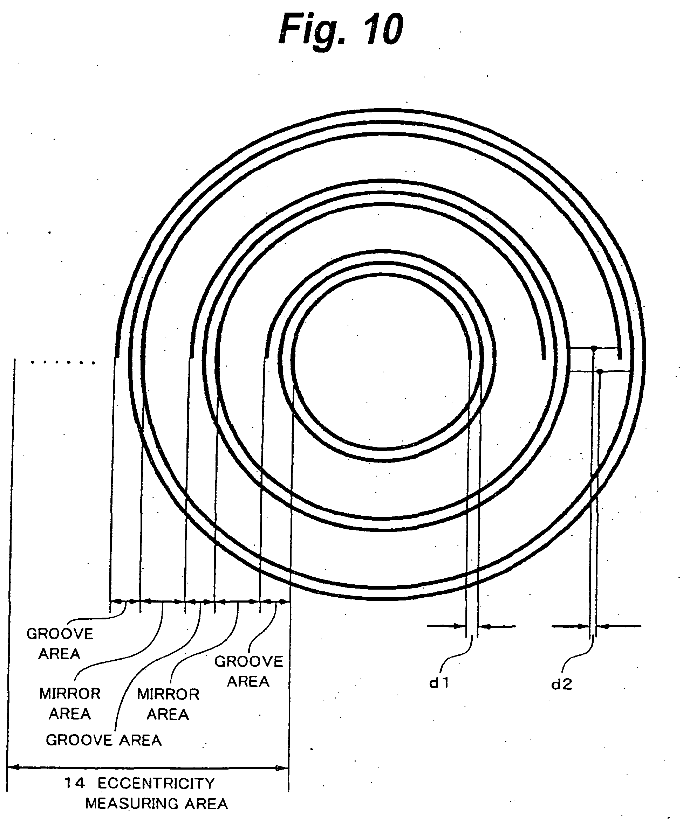

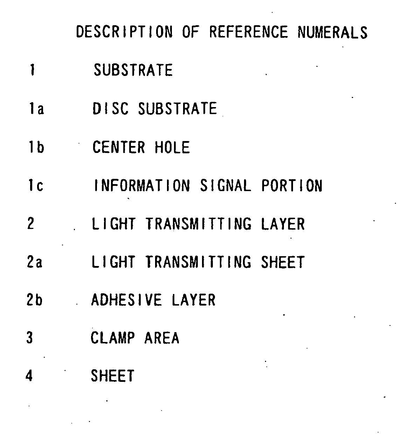

Fig. 1 is a cross sectional view showing a structure of an optical disc according to an embodiment of the invention. Fig. 2 is a cross sectional view showing a construction of a substrate according to the embodiment of the invention. Fig. 3 is a cross sectional view showing a construction of a sheet according to the embodiment of the invention. Fig. 4 is a perspective view of a disc substrate according to the embodiment of the invention. Fig. 5 is a plan view of an eccentricity measuring area provided for the disc substrate according to the embodiment of the invention. Fig. 6 is a schematic diagram showing a waveform of a push-pull signal at a joint. Fig. 7 is a schematic diagram showing a waveform of a push-pull signal which is caused when a pickup is moved to an adjacent groove area in the eccentricity measuring area. Fig. 8 is a cross sectional view showing an image upon reproduction of data of the optical disc according to the embodiment of the invention. Fig. 9 is a cross sectional view showing an image at the time of measurement of mechanical characteristics of the disc substrate according to the embodiment of the invention. Fig. 10 is a plan view of an eccentricity measuring area provided for a disc substrate according to a modification of the embodiment of the invention.

### Best Mode for Carrying Out the Invention

Embodiments of the invention will be described hereinbelow with reference to the drawings. The same or corresponding portions in all diagrams of the following embodiments are designated by the same reference numerals.

Fig. 1 shows an example of a construction of an optical disc according to an embodiment of the invention. Fig. 2 shows an example of a construction of a substrate according to the embodiment of the invention. Fig. 3 shows an example of a construction of a sheet according to the embodiment of the invention.

As shown in Fig. 1, the optical disc according to the embodiment of the invention is mainly constructed by: an annular ring-shaped substrate 1 having a center hole 1b in a center portion; and a planar annular ring-shaped light transmitting layer 2 having a through-hole 2c in the center portion. The optical disc according to the embodiment is constructed in such a manner that an information signal is recorded and/or reproduced by irradiating a laser beam onto the substrate 1 from the side where the thin light transmitting layer 2 is formed. The light transmitting layer 2 is formed by adhering a sheet 4 shown in Fig. 3 onto one principal plane of the substrate 1 shown in Fig. 2 on the side where an information signal portion 1c has been formed.

As shown in Fig. 1, a clamp area 3 to attach the optical disc to a spindle motor is provided near the center hole 1b of the optical disc. An inner rim diameter of the clamp area 3 is selected from a range of 22 to 24 mm and, for example, 23 mm is selected. An outer rim diameter of the clamp area 3 is selected from a range of 32 to 34 mm and, for example, 33 mm is selected.

As shown in Fig. 2, the substrate 1 is constructed by: a disc substrate 1a in which the center hole 1b is formed in the center portion and lands and grooves are formed on one principal plane; and the information signal portion 1c formed on one principal plane of the disc substrate 1a. A data area and an eccentricity measuring area are provided for the area where the lands and grooves have been formed. In the embodiment of the invention, on one principal plane of the disc substrate 1a, the portion near the incident light is called a groove and the portion formed between the grooves is called a land.

Fig. 4 is a perspective view of the disc substrate 1a according to the embodiment of the invention. As shown in Fig. 4, a non-data area 11 to attach the disc substrate 1a to the spindle motor, a data area 12 to form the information signal portion 1c, and a non-data area 13 having an eccentricity measuring area 14 to measure the eccentricity of the disc substrate 1a are sequentially provided on the disc substrate 1a from the inner rim side toward the outer rim side. Although an example in which the eccentricity measuring area 14 is formed in the non-data area 13 provided on the outer rim side is shown here, the eccentricity measuring area can be also formed in the non-data area 11 provided on the inner rim side.

A thickness of disc substrate 1a is selected from a range of 0. 6 to 1.2 mm and, for example, 1.1 mm is selected. A diameter (outer diameter) of the disc substrate 1a is equal to, for example, 120 mm. An opening diameter (inner diameter) of the center hole 1b is equal to, for example, 15 mm. In the data area 12, data is recorded either on the groove or on the land, or on both of them. A case where a system of recording the data onto the groove is selected is shown hereinbelow. A distance between the grooves formed in the data area 12 (track pitch) is set to, for example, 0.32 µm. A width of groove formed in the data area 12 is selected in consideration of signal characteristics and, for example, 0.22 µm (half value width) is selected.

The disc substrate 1a is made of a material which can transmit the laser beam which is used to measure at least the mechanical characteristics of the disc substrate 1a. As a material constructing the disc substrate 1a, a resin with low water absorption performance such as polycarbonate (PC), cycloolefin polymer (for example, ZEONEX (registered trademark)), or the like is used.

The information signal portion 1c is constructed by a reflective film, a film made of a magnetooptic material, a film made of a phase change material, an organic pigment film, or the like. Specifically speaking, when the optical disc as a final product is an optical disc of the ROM (Read Only Memory) type, the information signal portion 1c is constructed by a single layer film or a laminate film each having at least a reflective layer made of, for example, Al, an Al alloy, an Ag alloy, or the like. When the optical disc as a final product is an optical disc of a rewritable type, the information signal portion 1c is constructed by a single layer film or a laminate film each having at least either a film made of a magnetooptic material such as TbFeCo alloy, TbFeCoSi alloy, TbFeCoCr alloy, or the like or a film made of a phase change material such as GeSbTe alloy, GeInSbTe alloy, AgInSbTe alloy, or the like. When the optical disc as a final product is an optical disc of a WORM (Write Once Read Many) type, the information signal portion 1c is constructed by a single layer film or a laminate film each having at least either a film made of a phase change material such as a GeTe material or the like or a film made of an organic pigment material such as cyanine dye, phthalocyanine dye, or the like.

The eccentricity measuring area 14 is an area for measuring an eccentricity amount of the optical disc, specifically speaking, an area for measuring the eccentricity amount of the optical disc by using the conventional mechanical characteristics measuring apparatus of the optical disc. In the embodiment of the invention, for example, there is shown a case where the conventional mechanical characteristics measuring apparatus is a mechanical characteristics measuring apparatus for measuring the mechanical characteristics of the optical disc (for example, compact disc) in which a thickness of substrate is equal to 1.2 mm, specifically speaking, it is a mechanical characteristics measuring apparatus having an optical system including a semiconductor laser which emits a laser beam of a wavelength of 680 nm and an objective lens of an NA of 0.55.

Fig. 5 shows a plan view of the eccentricity measuring area 14 formed on one principal plane of the disc substrate 1a. As shown in Fig. 5, the eccentricitymeasuring area 14 is constructed in such a manner that a groove area in which spiral grooves have been formed and a planar mirror area are spatially alternately arranged. A width of eccentricity measuring area 14 is selected so as to have a value which is equal to or larger than the maximum value of the amount of eccentricity which is caused in the manufacturing step of the disc substrate 1a. Since the maximum value of the amount of eccentricity which is caused in the conventional manufacturing step of the disc substrate 1a is equal to about 30 µm, at least 30 µm or more is necessary as a width of eccentricity measuring area 14. Its upper limit is not restricted in terms of the eccentricity measurement. However, if the width of eccentricity measuring area 14 is too wide, a width of data area 12 decreases. It is, therefore, preferable to set the width of eccentricity measuring area 14 to 3 mm or less. From the above viewpoint, the eccentricity measuring area 14 is selected from a range of 30 µm to 3 mm and, for example, 100 µm is selected.

The spiral grooves are formed in the groove area around the center hole 1b as a center. By forming the grooves as mentioned above, the conventional mechanical characteristics measuring apparatus can obtain a tracking error signal (push-pull signal) of a sufficient level. That is, the conventional mechanical characteristics measuring apparatus can execute the proper tracking operation.

A repetition interval d₃ of the groove area or the mirror area is selected in accordance with the optical system of the mechanical characteristics measuring apparatus. That is, the repetition interval d₃ is selected so that the optical system of the mechanical characteristics measuring apparatus can track the groove area as if the groove area were a single groove. In the case of using the conventional mechanical characteristics measuring apparatus mentioned above, the repetition interval d₃ of the groove area or the mirror area is selected from a range of 0.7 to 2.5 µm and, for example, 1.6 µm is selected. When the repetition interval d₃ is equal to or more than 0.7 µm, in the mechanical characteristics measuring apparatus having the optical system as mentioned above, the tracking error signal (push-pull signal) of the sufficient level can be obtained. That is, the stable tracking operation can be executed. If the repetition interval d₃ is equal to or less than 2.5 µm, in the mechanical characteristics measuring apparatus having the optical system as mentioned above, the tracking error signal (push-pull signal) with small distortion can be obtained.

A width of groove area is selected in accordance with the optical system of the mechanical characteristics apparatus for measuring the mechanical characteristics of the optical disc. That is, it is selected so that the optical system of the mechanical characteristics measuring apparatus can track the groove area as if the groove area were a single groove.

When the mechanical characteristics of the optical disc are measured by using the conventional mechanical characteristics measuring apparatus as mentioned above, if the push-pull signal of the sufficient level without a distortion can be obtained, an arbitrary value can be selected as a width of groove area. Generally, by selecting the width of groove area to a value within a range of 0.2 to 0.8 time of the repetition interval d₃ of the groove area mentioned above, the above characteristics can be satisfied. Particularly, by selecting the width of groove area to a value which is equal to almost the half of the repetition interval d₃ of the groove area, the push-pull signal of the maximum amplitude with the suppressed distortion can be obtained. For example, if the repetition interval d₃ of the groove area is selected so as to be 1.6 µm, the width of groove area is selected so as to be, for example, 0.8 µm.

The mirror area formed adjacently to the groove area is a plane area on which no grooves are formed. A width of mirror area is selected in accordance with the optical system of the mechanical characteristics measuring apparatus for measuring the mechanical characteristics of the optical disc. That is, it is selected so that the optical system of the mechanical characteristics measuring apparatus can track the groove area as if the groove area were a single groove.

When the mechanical characteristics of the optical disc are measured by using the conventional mechanical characteristics measuring apparatus as mentioned above, if the push-pull signal of the sufficient level without a distortion can be obtained, an arbitrary value can be selected as a width of mirror area. Generally, by selecting the width of mirror area to a value within a range of 0.2 to 0.8 time of the repetition interval d₃ of the groove area mentioned above, the above characteristics can be satisfied. Particularly, by selecting the width of mirror area to a value which is equal to almost the half of the repetition interval d₃ of the groove area, the push-pull signal of the maximum amplitude with the suppressed distortion can be obtained. For example, if the repetition interval d₃ of the groove area is selected so as to be 1.6 µm, the width of mirror area is selected so as to be, for example, 0.8 µm.

It is generally unpreferable to spirally and intermittently form the grooves in the groove area. If the grooves are spirally and intermittently formed, the center of reproduction light is deviated at a joint from the center of the groove. Therefore, the push-pull signal fluctuates and the stable tracking operation cannot be executed. The joint indicates one end and the other end of the groove spirally formed in the groove area.

According to the optical disc and the disc substrate 1a of the embodiment, by properly selecting an interval d₁ between the grooves in the groove area, the fluctuation of the push-pull signal at the joint is reduced, thereby realizing the stable tracking operation.

The interval d₁ between the grooves in the groove area is determined in consideration of the optical system of the mechanical characteristics measuring apparatus which is used to measure the eccentricity of the disc substrate 1a and the fluctuation of the push-pull signal at the joint. When considering them, the interval d₁ between the grooves in the groove area is equal to or less than a diffraction limit of the optical system of the mechanical characteristics measuring apparatus for measuring the eccentricity of the disc substrate 1a and is selected so as to have a value of 0.01 to 0.25 time, preferably, 0.01 to 0.15 time of the repetition interval d₃ of the groove area or the mirror area.

For example, in the case of using the conventional mechanical characteristics measuring apparatus mentioned above, the interval d₁ between the grooves in the groove area is equal to or less than 0.6 µm and is selected so as to have a value of 0.01 to 0.25 time, preferably, 0.01 to 0. 15 time of the repetition interval between the groove area or the mirror area.

The diffraction limit of the optical system of the conventional mechanical characteristics measuring apparatus mentioned above corresponds to 0.6 µm as a spatial period. Therefore, by setting the interval between the grooves in the groove area to 0.6 µm or less, in the conventional mechanical characteristics apparatus, each groove in the groove area is not identified but a plurality of grooves formed in the groove area are identified as if the grooves were a single groove.

The interval d₁ between the grooves in the case of considering the fluctuation of the push-pull signal at the joint will now be described with reference to Figs. 6 and 7.

Fig. 6 shows a waveform of the push-pull signal at the joint. As shown in Fig. 6, a fluctuation occurs in the push-pull signal at the joint. An amount which is offset at this time is called an offset amount B hereinbelow.

Fig. 7 shows a waveform of the push-pull signal which is caused when the pickup is moved to the adjacent groove area. As shown in Fig. 7, the waveform of the push-pull signal which is caused when the pickup is moved to the adjacent groove area has an S-character shape. An amplitude at this time is called an amplitude (A) hereinbelow.

An upper limit value of the interval d₁ between the grooves in the groove area is selected so that the offset amount B is equal to or less than the amplitude (A). The offset amount B and the amplitude (A) are equal when a detrack amount at the joint is equal to almost 0.25 time of the width of groove area. Therefore, to prevent the tracking position from being detracked at the joint, it is necessary to select the detrack amount at the joint, that is, the interval d₁ between the grooves in the groove area so as to be equal to or less than 0.25 time of the interval between the groove areas.

To realize the more stable tracking operation without being influenced by a disturbance, it is preferable to select the detrack amount at the joint so that the offset amount B is equal to a smaller value, for example, the offset amount B is equal to or less than 0.8 time of the amplitude (A). The offset amount B is set to 0.8 time of the amplitude (A) when the detrack amount at the joint, that is, the interval d₁ between the grooves formed in the groove area is selected so as to be about 0.15 time of the interval between the groove areas.

A lower limit value of the interval d₁ between the grooves formed in the groove area is not particularly limited. When considering the productivity, however, it is preferable that the lower limit value is equal to or more than 0.01 time of the repetition interval d₃ of the groove area. By selecting the interval d₁ between the grooves as mentioned above, the situation in which it takes time to execute the cutting operation of a mother disc and the productivity is deteriorated can be avoided.

As shown in Fig. 3, the sheet 4 used to form the light transmitting layer 2 according to the embodiment is constructed by: a light transmitting sheet 2a; and an adhesive layer 2b made of a PSA (Pressure Sensitive Adhesion) adhered to one surface of the light transmitting sheet 2a. In a manner similar to the substrate 1, the sheet 4 has a structure punched in a planar annular ring shape and the through-hole 2c is formed in the center portion. A diameter (outer diameter) of the sheet 4 is selected so as to have a value which is almost equal to or less than the outer diameter of the substrate 1 and, for example, 120 mm is set . A diameter (inner diameter) of the through-hole 2c is selected from a range from the opening diameter of the center hole 1b or more to the innermost rim diameter (for example, 23 mm diameter) of the clamp area 3 and it is set to, 23 mm. A thickness of sheet 4 is equal to, for example, 100 µm.

Such a light transmitting sheet 2a of the sheet 4 is made of, for example, a thermoplastic resin with light transmittance which is used at least for recording and/or reproduction and satisfies the optical characteristics at which the laser beam can be transmitted. A material of the thermoplastic resin is selected from materials whose physical property values such as heat resisting dimensional stability, coefficient of thermal expansion, coefficient of hydroscopic expansion, and the like are close to those of the disc substrate 1a. Specifically speaking, it is selected from polycarbonate (PC), a methacrylic resin such as polymethyl methacrylate, and the like. A thickness of light transmitting sheet 2a is selected preferably from a range of 60 to 100 µm, more preferably, 70 to 100 µm. In the embodiment, the thickness of light transmitting sheet 2a is selected so as to be, for example, 70 µm in consideration of the structure in which the light transmitting sheet 2a is adhered onto one principal plane of the substrate 1 through the adhesive layer 2b made of the PSA (Pressure Sensitive Adhesion). The thickness of light transmitting sheet 2a is determined in consideration of the wavelength of the laser beam which is used to record and/or reproduce the information signal and the desired film thickness of the light transmitting layer 2.

The PSA constructing the adhesive layer 2b is, for example, the methacrylic resin or the like. A thickness of adhesive layer 2b is equal to, for example, 30 µm. The thickness of adhesive layer 2b and the material which is used as a pressure sensitive adhesion are determined in consideration of the desired film thickness of the light transmitting layer 2 and the wavelength of the laser beam which is used to record and/or reproduce the information signal.

Fig. 8 is a cross sectional view showing an image upon reproduction of the optical disc according to the embodiment of the invention. As shown in Fig. 8, in the optical disc according to the embodiment of the invention, the information signal is recorded and/or reproduced by irradiating the laser beam to the information signal portion 1c of the substrate 1 from the side where the thin light transmitting layer 2 has been formed.

Fig. 9 is a cross sectional view showing an image at the time of the measurement of the mechanical characteristics of the disc substrate 1a according to the embodiment of the invention. As shown in Fig. 9, in the disc substrate 1a according to the embodiment of the invention, the mechanical characteristics of the disc substrate 1a are measured by irradiating the laser beam to the surface on the side opposite to one principal plane of the side where concave and convex portions have been formed.

According to the embodiment of the invention, the following effects can be obtained.

The data area 12 formed with the spiral grooves and the eccentricity measuring area on which the groove area formed with the spiral grooves and the planar mirror area have alternately been arranged are provided on the disc substrate 1a. The interval d₁ between the grooves in the groove area is equal to or less than the diffraction limit of the optical system of the conventional mechanical characteristics measuring apparatus which is used to measure the eccentricity of the disc substrate and is selected so as to have a value of 0.01 to 0.25 time, preferably, 0.01 to 0.15 time of the repetition interval d₃ of the groove area or the mirror area. Therefore, the conventional mechanical characteristics measuring apparatus can stably track the groove area as if the apparatus tracked a single groove. Consequently, the eccentricity amount of the optical disc of the narrow track pitch having the spiral grooves can be measured by using the conventional mechanical characteristics measuring apparatus.

Since the eccentricity amount of the disc substrate 1a can be measured in the state where the light transmitting layer 2 is not formed, the optical disc can be manufactured by the efficient producing system.

Although the embodiment of the invention has specifically been described above, the invention is not limited to the foregoing embodiment but various modifications based on the technical idea of the invention are possible.

For instance, the numerical values mentioned in the foregoing embodiment have merely been shown as an example and other different numerical values can be also used as necessary.

Although the example in which the distance d₁ between the grooves formed in the eccentricity measuring area 14 and the distance between the grooves formed in the data area 12 are different has been shown in the foregoing embodiment, the distance d₁ between the grooves formed in the eccentricity measuring area 14 and the distance between the grooves formed in the data area 12 can be made coincident.

Although the case where, in the groove area formed with the spiral grooves, an end position of the intermittent groove (position of one end of the groove on the outer rim side) and a start position of the intermittent groove (position of one end of the groove on the inner rim side) are located in the same direction from the center of the disc substrate 1a has been shown as an example, the end position of the intermittent groove and the start position of the intermittent groove are not limited to such an example.

For example, as shown in Fig. 10, the direction starting from the center of the disc substrate 1a toward the start position of the intermittent groove and the direction starting from the center of the disc substrate 1a toward the end position of the intermittent groove can be made different by 180°. In this case, although the width of groove area differs depending on the position, there is such an advantage that the deviation amount of the center of the groove area at the joint is reduced to the half of the interval d₁ between the grooves in the groove area.

As described above, according to the invention, since the disc substrate has the eccentricity measuring area on which the groove area formed with the spiral grooves and the planar mirror area have spatially alternately been arranged, the conventional mechanical characteristics measuring apparatus can discriminate the groove area formed with the spiral grooves as if the groove area were a single groove. Therefore, the eccentricity amount of the disc substrate can be easily measured in the state just after the molding.

## Claims

1. A disc substrate (1a) having an eccentricity measuring area (14), which comprises a plurality of groove areas, in which spiral grooves are formed, and a plurality of planar mirror areas, which are spatially alternately arranged in radial direction, wherein a repetition interval (d3) of the groove areas or the mirror areas has a predetermined value;
wherein the disc substrate is **characterized in that** the width of said eccentricity measuring area (14) is selected so as to have a value in a range from 30 µm or more to 3mm or less.

2. A disc substrate (1a) according to claim 1, wherein an interval (d1) between said grooves is selected so as to have a value in a range from 0.01 time or more to 0.25 time or less of the repetition interval (d3) of said groove area or said mirror area.

3. A disc substrate (1a) according to claim 1, wherein an interval between said grooves (d1) is selected so as to have a value in a range from 0.01 time or more to 0.15 time or less of the repetition interval (d3) of said groove area or said mirror area.

4. A disc substrate (1a) according to claim 2, wherein the repetition interval (d3) of said groove area or said mirror area is set to a value in a range from 0.7 µm or more to 2.5 µm or less.

5. A disc substrate (1a) according to claim 2, wherein a width of said groove area is selected so as to have a value in a range from 0.2 time or more to 0.8 time or less of the repetition interval (d3) of said groove area or said mirror area.

6. A disc substrate (1a) according to claim 2, wherein a width of said groove area is equal to almost the half of the repetition interval (d3) of said groove area or said mirror area.

7. A disc substrate (1a) according to claim 1, wherein a clamp area (3) to attach an optical disc to a spindle motor is set near a center hole (1b) of said disc substrate (1a), an inner rim diameter of said clamp area (3) is selected from a range of 22 to 24 mm, and an outer rim diameter of said clamp area (3) is selected from a range of 32 to 34 mm.

8. A disc substrate (1a) according to claim 1, wherein a non-data area (11) to attach the disc substrate (1a) to a spindle motor, a data area (12) to form an information signal portion, and a non-data area having the eccentricity measuring area (14) to measure eccentricity of the disc substrate (1a) are sequentially provided.

9. A disc substrate (1a) according to claim 1, wherein a thickness of said disc substrate (1a) is selected from a range of 0.6 to 1.2 mm, a diameter (outer diameter) of said disc substrate (1a) is equal to 80 to 120 mm, and an opening diameter (inner diameter) of a center hole (1b) is equal to about 15 mm.

10. A disc substrate (1a) according to claim 1, wherein a distance (track pitch) between the grooves formed in a data area is equal to about 0.32 µm and a width of each groove formed in the data area is equal to about 0.22 µm (half value width).

11. An optical disc comprising:
a disc substrate (1a) having an eccentricity measuring area (14), which comprises a plurality of groove areas, in which spiral grooves are formed, and a plurality of planar mirror areas, which are spatially alternately arranged in radial direction, wherein a repetition interval (d3) of the groove areas or the mirror areas has a predetermined value;
an information signal portion (1c) formed on one principal plane of said disc substrate (1a); and
a protective layer (2) for protecting said information signal portion (1c);
wherein the optical disc is **characterized in that** the width of said eccentricity measuring area (14) is selected so as to have a value in a range from 30 µm or more to 3mm or less.

12. An optical disc according to claim 11, wherein said protective layer (2) has light transmittance and recording and/or reproduction of an information signal are/is executed by irradiating a laser beam from the side where said protective layer (2) is provided.

13. An optical disc according to claim 11, wherein an interval (d1) between said grooves is selected so as to have a value in a range from 0.01 time or more to 0.25 time or less of a repetition interval (d3) of said groove area or said mirror area.

14. An optical disc according to claim 11, wherein an interval (d1) between said grooves is selected so a to have a value in a range from 0.01 time or more to 0.15 time or less of a repetition interval (d3) of said groove area or said mirror area.

15. An optical disc according to claim 13, wherein the repetition interval (d3) of said groove area or said mirror area is set to a value in a range from 0.7 µm or more to 2.5 µm or less.

16. An optical disc according to claim 13, wherein a width of said groove area is selected so as to have a value in a range from 0.2 time or more to 0.8 time or less of the repetition interval (d3) of said groove area or said mirror area.

17. An optical disc according to claim 13, wherein a width of said groove area is equal to almost the half of the repetition interval (d3) of said groove area or said mirror area.

18. An optical disc according to claim 11, wherein said protective layer (2) is made of a light transmitting layer and formed by adhering a sheet (4) onto one principal plane of the substrate (1a) on the side where said information signal portion (1c) has been formed.

19. An optical disc according to claim 11, wherein a clamp area (3) to attach an optical disc to a spindle motor is set near a center hole (1b) of said disc substrate (1a), an inner rim diameter of said clamp area (3) is selected from a range of 22 to 24 mm, and an outer rim diameter of said clamp area (3)is selected from a range of 32 to 34 mm.

20. An optical disc according to claim 11, wherein the non-data area (11) to attach the disc substrate to a spindle motor, a data area (12) to form the information signal portion, and a non-data area having an eccentricity measuring area (14) to measure eccentricity of the disc substrate (1a) are sequentially provided.

21. An optical disc according to claim 11, wherein a thickness of said disc substrate (1a) is selected from a range of 0.6 to 1.2 mm, a diameter (outer diameter) of said disc substrate (1a) is equal to 80 to 120 mm, and an opening diameter (inner diameter) of a center hole (1b) is equal to about 15 mm.

22. An optical disc according to claim 11, wherein a distance (track pitch) between the grooves formed in a data area is equal to about 0.32 µm and a width of each groove formed in the data area (12) is equal to abut 0.22 µm (half value width).

23. An optical disc according to claim 11, wherein the sheet which is used to form said light transmitting layer (2) comprises a light transmitting sheet (2a) and a PSA (Pressure Sensitive Adhesion) (2b) adhered to one surface of said light transmitting sheet (2a).

## Patentansprüche

1. Plattensubstrat (1a), das einen Exzentrizität-Messbereich (14) aufweist, der mehrere Rillenbereiche umfasst, in denen spiralförmige Rillen ausgebildet sind, und mehrere flache Spiegelbereiche umfasst, die räumlich abwechselnd in Radialrichtung angeordnet sind, wobei ein Wiederholungsintervall (d3) der Rillenbereiche oder der Spiegelbereiche einen vorbestimmten Wert aufweist;
wobei das Plattensubstrat **dadurch gekennzeichnet ist, dass** die Breite des Exzentrizität-Messbereichs (14) so gewählt ist, dass sie einen Wert in einem Bereich von 30 µm oder mehr bis 3 mm oder weniger aufweist.

2. Plattensubstrat (1a) gemäß Anspruch 1, wobei ein Intervall (d1) zwischen den Rillen so gewählt ist, dass es einen Wert in einem Bereich von 0,01 mal oder mehr bis 0,25 mal oder weniger des Wiederholungsintervalls (d3) des Rillenbereichs oder des Spiegelbereichs aufweist.

3. Plattensubstrat (1a) gemäß Anspruch 1, wobei ein Intervall zwischen den Rillen (d1) so gewählt ist, dass es einen Wert in einem Bereich von 0,01 mal oder mehr bis 0,15 mal oder weniger des Wiederholungsintervalls (d3) des Rillenbereichs oder des Spiegelbereichs aufweist.

4. Plattensubstrat (1a) gemäß Anspruch 2, wobei das Wiederholungsintervall (d3) des Rillenbereichs oder des Spiegelbereichs auf einen Wert in einem Bereich von 0,7 µm oder mehr bis 2,5 µm oder weniger gesetzt ist.

5. Plattensubstrat (1a) gemäß Anspruch 2, wobei eine Breite des Rillenbereichs so gewählt ist, dass sie einen Wert in einem Bereich von 0,2 mal oder mehr bis 0,8 mal oder weniger des Wiederholungsintervalls (d3) des Rillenbereichs oder des Spiegelbereichs aufweist.

6. Plattensubstrat (1a) gemäß Anspruch 2, wobei eine Breite des Rillenbereichs gleich nahezu der Hälfte des Wiederholungsintervalls (d3) des Rillenbereichs oder des Spiegelbereichs ist.

7. Plattensubstart (1a) gemäß Anspruch 1, wobei ein Klemmbereich (3), um eine optische Platte an einem Spindelmotor anzubringen, nahe einem zentralen Loch (1b) des Plattensubstrats (1a) angeordnet ist, ein innerer Randdurchmesser des Klemmbereichs (3) aus einem Bereich von 22 bis 24 mm gewählt ist und ein äußerer Randdurchmesser des Klemmbereichs (3) aus einem Bereich von 32 bis 34 mm gewählt ist.

8. Plattensubstrat (1a) gemäß Anspruch 1, wobei ein Nicht-Datenbereich (11), um das Plattensubstrat (1a) an einem Spindelmotor anzubringen, ein Datenbereich (12), um einen Informationssignalteil zu bilden, und ein Nicht-Datenbereich, der den Exzentrizität-Messbereich aufweist, um die Exzentrizität des Plattensubstrats (1a) zu messen, aufeinander folgend angeordnet sind.

9. Plattensubstart (1a) gemäß Anspruch 1, wobei eine Dicke des Plattensubstrats (1a) aus einem Bereich von 0,6 bis 1,2 mm gewählt ist, ein Durchmesser (Außendurchmesser) des Plattensubstrats (1a) gleich 80 bis 120 mm ist und ein Öffnungsdurchmesser (Innendurchmesser) eines zentralen Lochs (1b) gleich etwa 15 mm ist.

10. Plattensubstrat (1a) gemäß Anspruch 1, wobei eine Entfernung (Spurabstand) zwischen den Rillen, die in einem Datenbereich ausgebildet sind, gleich etwa 0,32 µm ist und eine Breite jeder Rille, die in dem Datenbereich ausgebildet ist, gleich etwa 0,22 µm ist (Halbwertbreite).

11. Optische Platte aufweisend
ein Plattensubstrat (1a), das einen Exzentrizität-Messbereich (14) aufweist, der mehrere Rillenbereiche umfasst, in denen spiralförmige Rillen ausgebildet sind, und mehrere flache Spiegelbereiche umfasst, die räumlich abwechselnd in Radialrichtung angeordnet sind, wobei ein Wiederholungsintervall (d3) der Rillenbereiche oder der Spiegelbereiche einen vorbestimmten Wert aufweist;
einen Informationssignalteil (1c), der auf einer Hauptebene des Plattensubstrats (1a) gebildet ist; und
eine Schutzschicht (2) zum Schützen des Informationssignalteils (1c);
wobei die optische Platte **dadurch gekennzeichnet ist, dass** die Breite des Exzentrizität-Messbereichs (14) so gewählt ist, dass sie einen Wert in einem Bereich von 30 µm oder mehr bis 3 mm oder weniger aufweist.

12. Optische Platte gemäß Anspruch 11, wobei die Schutzschicht (2) lichtdurchlässig ist und das Aufzeichnen und/oder Wiedergeben eines Informationssignals durch Bestrahlung mit einem Laserstrahl von der Seite aus durchgeführt wird, auf der die Schutzschicht (2) angeordnet ist.

13. Optische Platte gemäß Anspruch 11, wobei ein Intervall (d1) zwischen den Rillen so gewählt ist, dass es einen Wert in einem Bereich von 0,01 mal oder mehr bis 0,25 mal oder weniger des Wiederholungsintervalls (d3) des Rillenbereichs oder des Spiegelbereichs aufweist.

14. Optische Platte gemäß Anspruch 11, wobei ein Intervall (d1) zwischen den Rillen so gewählt ist, dass es einen Wert in einem Bereich von 0,01 mal oder mehr bis 0,15 mal oder weniger des Wiederholungsintervalls (d3) des Rillenbereichs oder des Spiegelbereichs aufweist.

15. Optische Platte gemäß Anspruch 13, wobei das Wiederholungsintervall (d3) des Rillenbereichs oder des Spiegelbereichs auf einen Wert in einem Bereich von 0,7 µm oder mehr bis 2,5 µm oder weniger gesetzt ist.

16. Optische Platte gemäß Anspruch 13, wobei eine Breite des Rillenbereichs so gewählt ist, dass sie einen Wert in einem Bereich von 0,2 mal oder mehr bis 0,8 mal oder weniger des Wiederholungsintervalls (d3) des Rillenbereichs oder des Spiegelbereichs aufweist.

17. Optische Platte gemäß Anspruch 13, wobei eine Breite des Rillenbereichs gleich nahezu der Hälfte des Wiederholungsintervalls (d3) des Rillenbereichs oder des Spiegelbereichs ist.

18. Optische Platte gemäß Anspruch 11, wobei die Schutzschicht (2) aus einer lichtdurchlässigen Lage besteht und gebildet wird, indem eine Lage (4) auf eine Hauptebene des Substrats (1a) auf der Seite, auf dem der Informationssignalteil (1c) gebildet wurde, angehaftet wird.

19. Optische Platte gemäß Anspruch 11, wobei ein Klemmbereich (3), um eine optische Platte an einem Spindelmotor anzubringen, nahe einem zentralen Loch (1b) des Plattensubstrats (1a) angeordnet ist, ein innerer Randdurchmesser des Klemmbereichs (3) aus einem Bereich von 22 bis 24 mm gewählt ist und ein äußerer Randdurchmesser des Klemmbereichs (3) aus einem Bereich von 32 bis 34 mm gewählt ist.

20. Optische Platte gemäß Anspruch 11, wobei der Nicht-Datenbereich (11), um das Plattensubstrat (1a) an einem Spindelmotor anzubringen, ein Datenbereich (12), um den Informationssignalteil zu bilden, und ein Nicht-Datenbereich, der einen Exzentrizität-Messbereich aufweist, um die Exzentrizität des Plattensubstrats (1a) zu messen aufweist, aufeinander folgend angeordnet sind.

21. Optische Platte gemäß Anspruch 11, wobei eine Dicke des Plattensubstrats (1a) aus einem Bereich von 0,6 bis 1,2 mm gewählt ist, ein Durchmesser (Außendurchmesser) des Plattensubstrats (1a) gleich 80 bis 120 mm ist und ein Öffnungsdurchmesser (Innendurchmesser) eines zentralen Lochs (1b) gleich etwa 15 mm ist.

22. Optische Platte gemäß Anspruch 11, wobei eine Entfernung (Spurabstand) zwischen den Rillen, die in einem Datenbereich ausgebildet sind, gleich etwa 0,32 µm ist und eine Breite jeder Rille, die in dem Datenbereich ausgebildet ist, gleich etwa 0,22 µm ist (Halbwertbreite).

23. Optische Platte gemäß Anspruch 11, wobei die Lage, die benutzt wird um die lichtdurchlässige Schicht zu bilden, eine lichtdurchlässige Lage (2a) und eine PSA (drucksensitive Anhaftung) (2b) aufweist, die an eine Oberfläche der lichtdurchlässigen Lage (2a) angehaftet ist.

## Revendications

1. Substrat de disque (1a) comportant une zone mesure d'excentricité (14), qui comprend une pluralité de zones rainure, dans lesquelles sont formées des rainures en spirale, et une pluralité de zones miroir plan, qui sont agencées spatialement en alternance dans la direction radiale, dans lequel un intervalle de répétition (d3) des zones rainure ou des zones miroir a une valeur prédéfinie ;
le substrat de disque étant **caractérisé en ce que** la largeur de ladite zone mesure d'excentricité (14) est sélectionnée de manière à avoir une valeur comprise dans la plage de 30 µm, ou plus, à 3 mm, ou moins.

2. Substrat de disque (1a) selon la revendication 1, dans lequel un intervalle (d1) entre lesdites rainures est sélectionné de manière à avoir une valeur comprise dans la plage de 0,01 fois, ou plus, à 0,25 fois, ou moins, l'intervalle de répétition (d3) de ladite zone rainure ou de ladite zone miroir.

3. Substrat de disque (1a) selon la revendication 1, dans lequel un intervalle entre lesdites rainures (d1) est sélectionné de manière à avoir une valeur comprise dans la plage de 0,01 fois, ou plus, à 0,15 fois, ou moins, l'intervalle de répétition (d3) de ladite zone rainure ou de ladite zone miroir.

4. Substrat de disque (1a) selon la revendication 2, dans lequel l'intervalle de répétition (d3) de ladite zone rainure ou de ladite zone miroir est fixé à une valeur comprise dans une plage de 0,7 µm, ou plus, à 2,5 µm, ou moins.

5. Substrat de disque (1a) selon la revendication 2, dans lequel une largeur de ladite zone rainure est sélectionnée de manière à avoir une valeur comprise dans une plage de 0,2 fois, ou plus, à 0,8 fois, ou moins, l'intervalle de répétition (d3) de ladite zone rainure ou de ladite zone miroir.

6. Substrat de disque (1a) selon la revendication 2, dans lequel une largeur de ladite zone rainure est égale à presque la moitié de l'intervalle de répétition (d3) de ladite zone rainure ou de ladite zone miroir.

7. Substrat de disque (1a) selon la revendication 1, dans lequel une zone serrage (3) servant à fixer un disque optique à un moteur à axe est située près d'un trou central (1b) dudit substrat de disque (1a), un diamètre de bord intérieur de ladite zone serrage (3) étant sélectionné dans une plage de 22 à 24 mm, et un diamètre de bord extérieur de ladite zone serrage (3) étant sélectionné dans une plage de 32 à 34 mm.

8. Substrat de disque (1a) selon la revendication 1, dans lequel une zone non-données (11) servant à fixer le substrat de disque (1a) à un moteur à axe, une zone données (12) servant à former une partie signal d'informations, et une zone non-données comportant la zone mesure d'excentricité (14) servant à mesurer l'excentricité du substrat de disque (1a) sont disposées séquentiellement.

9. Substrat de disque (1a) selon la revendication 1, dans lequel une épaisseur dudit substrat de disque (1a) est sélectionnée dans une plage de 0,6 à 1,2 mm, un diamètre (diamètre extérieur) dudit substrat de disque (1a) est égal à une valeur de 80 à 120 mm, et un diamètre d'ouverture (diamètre intérieur) d'un trou central (1b) est égal à environ 15 mm.

10. Substrat de disque (1a) selon la revendication 1, dans lequel une distance (pas de piste) entre les rainures formées dans une zone données est égale à environ 0,32 µm et une largeur de chaque rainure formée dans la zone données est égale à environ 0,22 µm (largeur de moitié de valeur).

11. Disque optique comprenant :
un substrat de disque (1a) comportant une zone mesure d'excentricité (14), qui comprend une pluralité de zones rainure, dans lesquelles sont formées des rainures en spirale, et une pluralité de zones miroir plan, qui sont agencées spatialement en alternance dans la direction radiale, dans lequel un intervalle de répétition (d3) des zones rainure ou des zones miroir a une valeur prédéfinie ;
une partie signal d'informations (1c) formée sur un plan principal dudit substrat de disque (1a) ; et
une couche de protection (2) destinée à protéger ladite partie signal d'informations (1c) ;
le substrat de disque étant **caractérisé en ce que** la largeur de ladite zone mesure d'excentricité (14) est sélectionnée de manière à avoir une valeur comprise dans la plage de 30 µm, ou plus, à 3 mm, ou moins.

12. Disque optique selon la revendication 11, dans lequel ladite couche de protection (2) a une transmittance de lumière, et l'enregistrement et/ou la reproduction d'un signal d'informations sont/est exécutés par rayonnement d'un faisceau laser depuis le côté où se trouve ladite couche de protection (2).

13. Disque optique selon la revendication 11, dans lequel un intervalle (d1) entre lesdites rainures est sélectionné de manière à avoir une valeur comprise dans une plage de 0,01 fois, ou plus, à 0,25 fois, ou moins, un intervalle de répétition (d3) de ladite zone rainure ou de ladite zone miroir.

14. Disque optique selon la revendication 11, dans lequel un intervalle (d1) entre lesdites rainures est sélectionné de manière à avoir une valeur comprise dans une plage de 0,01 fois, ou plus, à 0,15 fois, ou moins, un intervalle de répétition (d3) de ladite zone rainure ou de ladite zone miroir.

15. Disque optique selon la revendication 13, dans lequel l'intervalle de répétition (d3) de ladite zone rainure ou de ladite zone miroir est fixé à une valeur comprise dans une plage de 0,7 µm, ou plus, à 2,5 µm, ou moins.

16. Disque optique selon la revendication 13, dans lequel une largeur de ladite zone rainure est sélectionnée de manière à avoir une valeur comprise dans une plage de 0,2 fois, ou plus, à 0,8 fois, ou moins, l'intervalle de répétition (d3) de ladite zone rainure ou de ladite zone miroir.

17. Disque optique selon la revendication 13, dans lequel une largeur de ladite zone rainure est égale à presque la moitié de l'intervalle de répétition (d3) de ladite zone rainure ou de ladite zone miroir.

18. Disque optique selon la revendication 11, dans lequel ladite couche de protection (2) est constituée d'une couche de transmission de lumière et formée par l'adhérence d'une feuille (4) sur un plan principal du substrat (1a) sur le côté où a été formée ladite partie signal d'informations (1c).

19. Disque optique selon la revendication 11, dans lequel une zone serrage (3) servant à fixer un disque optique à un moteur à axe est située près d'un trou central (1b) dudit substrat de disque (1a), un diamètre de bord intérieur de ladite zone serrage (3) étant sélectionné dans une plage de 22 à 24 mm, et un diamètre de bord extérieur de ladite zone serrage (3) étant sélectionné dans une plage de 32 à 34 mm.

20. Disque optique selon la revendication 11, dans lequel la zone non-données (11) servant à fixer le substrat de disque à un moteur à axe, une zone données (12) servant à former la partie signal d'informations, et une zone non-données comportant une zone mesure d'excentricité (14) servant à mesurer l'excentricité du substrat de disque (1a) sont disposées séquentiellement.

21. Disque optique selon la revendication 11, dans lequel une épaisseur dudit substrat de disque (1a) est sélectionnée dans une plage de 0,6 à 1,2 mm, un diamètre (diamètre extérieur) dudit substrat de disque (1a) est égal à une valeur de 80 à 120 mm, et un diamètre d'ouverture (diamètre intérieur) d'un trou central (1b) est égal à environ 15 mm.

22. Disque optique selon la revendication 11, dans lequel une distance (pas de piste) entre les rainures formées dans une zone données est égale à environ 0,32 µm et une largeur de chaque rainure formée dans la zone données (12) est égale à environ 0,22 µm (largeur de moitié de valeur).

23. Disque optique selon la revendication 11, dans lequel la feuille qui est utilisée pour former ladite couche de transmission de lumière (2) comprend une feuille de transmission de lumière (2a) et un PSA (adhésif sensible à la pression) (2b) adhérant à une surface de ladite feuille de transmission de lumière (2a).
